# EUROPÄISCHE PATENTSCHRIFT

(11) **EP 3 005 674 B1**
(45) Veröffentlichungstag und Bekanntmachung des Hinweises auf die Patenterteilung: **09.10.2019**
(21) Anmeldenummer: 14728490.5
(22) Anmeldetag: 27.05.2014
(51) Int. Cl.: H04N 1/00, H04N 1/10

(54) **VERFAHREN UND VORRICHTUNG ZUR DOKUMENTENERFASSUNG**
METHOD AND DEVICE FOR SCANNING DOCUMENT
PROCÉDÉ ET DISPOSITIF D'ACQUISITION DE DOCUMENT

(30) Priorität: 31.05.2013 DE 102013210157
(43) Veröffentlichungstag der Anmeldung: 13.04.2016
(73) Patentinhaber: Bundesdruckerei GmbH, 10969 Berlin (DE)
(72) Erfinder: HERES, Roland, 31535 Neustadt (DE)
(74) Vertreter: Ramrath, Lukas
(86) Internationale Anmeldenummer: PCT/EP2014/060885
(87) Internationale Veröffentlichungsnummer: WO 2014/191377

(56) Entgegenhaltungen:
- EP-A2- 0 911 906
- WO-A1-02/11078
- WO-A1-2007/025927
- DE-A1-102006 031 968
- DE-A1-102008 051 377
- US-A1- 2011 193 753
- US-A1- 2013 088 758

## Beschreibung

Die Erfindung betrifft ein Verfahren und eine Vorrichtung zur Dokumentenerfassung.

Aus dem Stand der Technik sind Vorrichtungen zur Dokumentenerfassung bekannt. Diese dienen z.B. einer optischen Erfassung eines Dokuments, insbesondere von optisch abbildbaren Merkmalen des Dokuments. Beispielsweise kann mittels einer derartigen Vorrichtung eine Seite des Dokuments abgebildet werden. Weiter können optische Merkmale bildbasiert detektiert und gegebenenfalls verifiziert werden.

So beschreibt die nachveröffentlichte DE 10 2012 211 076.3 eine Vorrichtung zur Dokumentenerfassung, wobei die Vorrichtung ein Stativ und mindestens eine Einrichtung zur Bilderfassung umfasst, wobei die Einrichtung zur Bilderfassung am oder im Stativ angeordnet ist, wobei die Vorrichtung weiter einen Einsatz umfasst und der Einsatz mindestens eine Auflagefläche zur Auflage eines Dokuments aufweist. Der Einsatz ist derart bewegbar, dass zumindest ein Teil der Auflagefläche durch zumindest einen Teil eines Erfassungsbereiches der mindestens einen Einrichtung zur Bilderfassung bewegbar ist. Die Vorrichtung kann mindestens eine Einrichtung zum Empfang von RFID-Signalen (Radio-Frequency-Identification-Signalen) umfassen. Die Einrichtung zum Empfang von RFID-Signalen kann beispielsweise als RFID-Antenne ausgebildet sein. Die Einrichtung zum Empfang von RFID-Signalen kann hierbei beispielsweise im oder am Stativ angeordnet sein. Vorzugsweise kann die Einrichtung zum Empfang von RFID-Signalen in einer Bewegungsrichtung des Einsatzes, beispielsweise in einer Bewegungsrichtung einer Vorwärtsbewegung des Einsatzes, hinter dem mindestens einen Mittel zur Bilderfassung angeordnet sein. Alternativ kann die Einrichtung zum Empfang von RFID-Signalen im oder am Einsatz angeordnet sein.

Auch die nachveröffentlichte DE 10 2012 215 845.6 offenbart eine Vorrichtung zur Dokumentenerfassung, wobei die Vorrichtung ein Stativ und mindestens eine Einrichtung zur Bilderfassung umfasst, wobei die Einrichtung zur Bilderfassung am oder im Stativ angeordnet ist. Die Vorrichtung umfasst weiter einen Einsatz, wobei der Einsatz mindestens eine Auflagefläche zur Auflage eines Dokuments aufweist, wobei der Einsatz derart bewegbar ist, dass zumindest ein Teil der Auflagefläche in oder durch zumindest einen Teil eines Erfassungsbereiches der mindestens einen Einrichtung zur Bilderfassung bewegbar ist. Die Vorrichtung umfasst eine Einrichtung zur Bewegungserfassung, wobei mittels der Einrichtung zur Bewegungserfassung Bewegungsinformationen der Auflagefläche im Erfassungsbereich erfassbar sind, wobei die Einrichtung zur Bewegungserfassung und die mindestens eine Einrichtung zur Bilderfassung derart miteinander gekoppelt sind, dass eine Bilderfassung erst dann durchführbar ist, wenn die Auflagefläche still steht. Die Druckschrift offenbart eine erste RFID-Antenne des Stativs, die in einer Einfassung der ersten Kamera angeordnet ist. Diese RFID-Antenne kann kontaktlos mit einem RFID-Sender kommunizieren, der in dem auf den ersten Teil der Auflagefläche aufgelegten Dokument angeordnet ist. Die Kommunikation erfolgt bevorzugt gemäß ISO 14443, wobei der RFID-Sender im Dokument bevorzugt passiv ausgeführt ist. Beispielsweise kann die RFID-Antenne Energie an den in dem Dokument angeordneten Sender übertragen sowie Signale senden als auch empfangen.

Weiter ist es bekannt, eine Antenne eines RFID-Transponders durch Aufbringen einer transparenten, leitfähigen Beschichtung auf einer Fläche herzustellen. So beschreibt die DE 10 2006 031 968 A1 einen RFID-Transponder mit einer Antenne, wobei die Antenne optisch transparent ausgebildet ist.

Die EP 0 911 906 A2 offenbart eine transparente Antenne mit einer ersten transparenten Lage eines dünnen Films und einem ersten transparenten planaren strahlenden Element mit einer ersten Betriebsfrequenz, die über der ersten transparenten Lage angeordnet ist, wobei Strukturen unter der ersten transparenten Lage sichtbar sind. Weiter umfasst die transparente Antenne eine erste transparente Grundfläche.

Die DE 10 2006 031 968 A1 offenbart einen RFID-Transponder, ein optisches Element mit einem RFID-Transponder sowie eine Antenne für einen RFID-Transponder. Hierbei ist die Antenne optisch transparent ausgebildet.

Die US 2007/0296592 A1 offenbart ein Anzeigemodul mit einem transparenten RFID-Modul. Das RFID-Modul umfasst einen RFID-Chip und eine transparente Antenne, die elektrisch mit dem RFID-Chip verbunden ist.

Die DE 10 2008 051 377 A1 offenbart eine Bildlesevorrichtung, wobei ein magnetisches Schirmglied die Interferenz einer elektromagnetischen Welle zur Energiezufuhr oder einer elektromagnetischen Welle zum Senden und Empfangen der ID-Informationen unterdrückt, die sich sonst zu einer Leseeinheit ausbreiten würden, mit einem Trägerkabel der Leseeinheit und dergleichen. Auch wenn eine ID-Informationserlangungseinheit ID-Informationen eines elektronischen Etiketts einer RFID-Karte erlangt, während eine Bildleseoberfläche der RFID-Karte durch die Leseeinheit gerade abgebildet wird, kann somit ein Einfluss der elektromagnetischen Welle zur Energiezufuhr, der elektromagnetischen Welle zum Senden und Empfangen der ID-Informationen oder beider auf die Leseeinheit unterdrückt werden. Damit können, selbst wenn Aufnahmebilddaten, welche die Bildleseoberfläche der RFID-Karte darstellen, und die ID-Informationen des elektronischen Etiketts gleichzeitig erlangt werden, die erlangten Aufnahmebilddaten, welche die Bildleseoberfläche der RFID-Karte darstellen, eine hohe Qualität haben.

Die JP 2010-206 770 A offenbart einen Leser mit einer Schleifenantenne zum Lesen von Informationen, die in einem IC Chip gespeichert sind, der auf einem Pass angeordnet ist, durch Radiokommunikation. Weiter umfasst der Leser eine Bildleseoberfläche zum optischen Lesen von Informationen in einem Lesebereich auf dem Pass sowie einen digitalen Schaltkreisteil zum Verarbeiten der gelesenen Informationen oder Bildinformationen.

Die US 2013/0088758 A1 offenbart ein Bildlesegerät mit einem Dokumententisch, auf dem das Dokument angeordnet wird. Weiter umfasst das Bildlesegerät einen Bildleseabschnitt, der ein Bild von dem Manuskript, welche auf dem Dokumententisch angeordnet ist, liest. Weiter umfasst das Bildlesegerät einen Informationsgewinnungsabschnitt, der Informationen in einer drahtlosen Kommunikation von einem IC Chip, der auf dem Dokumententisch angeordnet ist, liest.

Die US 2011/193753 offenbart ein Antennengerät und ein portables Terminal, welches das Antennengerät umfasst. Das Antennengerät kann ein Gehäuse umfassen, welches ein transparentes Schutzglas aufweist, das ein Gehäuseteil abdeckt. Eine Antennenstruktur kann auf dem Schutzglas geformt sein.

Die WO 2007/025927 A1 offenbart einen Scanner zum optischen und elektrischen Abtasten von mit Transpondern ausgestatteten Dokumenten. Der Scanner umfasst einen Spiegel unterhalb einer Glasplatte zum Ablenken von Licht von einer optischen Abtasteinrichtung auf ein Dokument, welches auf der Glasplatte liegt, und zum Weiterleiten von Lichtsignalen von dem Dokument zu der optischen Abtastvorrichtung. Der Spiegel ist ein Metallspiegel, wobei eine Metallschicht in einzelne Spiegelsegmente unterteilt ist. Die Spiegelsegmente bilden nur kleine zusammenhängende elektrische Oberflächen, die Radiowellen nicht stören. Es ist daher möglich, in dem Scanner eine elektrische Abtasteinrichtung für das Senden und Empfangen von Funkwellen vorzusehen, um ein Transponder in dem Dokument auszulesen.

Die WO 02/11078 A1 betrifft eine Vorrichtung zur Steuerung eines Ausweisdokuments oder dergleichen, wie ein Personalausweis, wobei das Dokument mindestens einen Transponder und einen Code umfasst.

Neben der optischen Erfassung des Dokuments kann auch eine uni- oder bidirektionale Datenkommunikation mit entsprechenden Kommunikationsmitteln, die auf oder in dem Dokument angeordnet sind, erfolgen. Hierzu kann die Vorrichtung zur Dokumentenerfassung entsprechende korrespondierende Kommunikationsmittel umfassen. Bekannt ist z.B. eine Kommunikation mittels sogenannter RFID-Systeme (Radio Frequency Identification-Systeme). Diese umfassen eine dokumentenseitig angeordnete Transpondereinrichtung und eine prüfgeräteseitig angeordnete Leseeinrichtung. Mittels der Leseeinrichtung können von der Transpondereinrichtung ausgesendete oder modulierte RFID-Signale zumindest empfangen werden.

Zur optischen Erfassung umfassen Vorrichtungen zur Dokumentenerfassung in der Regel ein aus einem transparenten Material ausgebildetes Auflageelement, welches eine Auflagefläche aufweist, auf die das zu erfassende Dokument aufgelegt werden kann. Die optische Erfassung kann dann durch das transparente Auflageelement hindurch erfolgen.

Um eine Qualität der Bilderfassung nicht zu verringern, werden keine weiteren Elemente der Vorrichtung zur Dokumentenerfassung, insbesondere auch nicht Teile der RFID-Leseeinrichtung im Bereich des transparenten Auflageelements angeordnet. Diese Elemente werden somit außerhalb des Auflageelements angeordnet. Im Falle des RFID-Lesegeräts vergrößert sich jedoch hierdurch ein Abstand zwischen dem RFID-Lesegerät und der dokumentenseitig angeordneten Transpondereinrichtung. Dieser Abstand und/oder erforderliche geometrische Abmaße verringern eine elektromagnetische Kopplung zwischen Lesegerät und Transpondereinrichtung. Dies wiederum bedingt nachteilig eine Verminderung der Übertragungsrate und -qualität.

Es stellt sich daher das technische Problem, eine Vorrichtung sowie ein Verfahren zur Dokumentenerfassung zu schaffen, welche eine Kommunikationsqualität, insbesondere eine Datenrate der Kommunikation zwischen Lesegerät und Transpondereinrichtung, verbessert.

Die Lösung des technischen Problems ergibt sich durch die Gegenstände mit den Merkmalen der Ansprüche 1 und 9. Weitere vorteilhafte Ausgestaltungen der Erfindung ergeben sich aus den Unteransprüchen.

Es ist eine Grundidee der Erfindung, zumindest einen Teil einer RFID-Leseeinrichtung, insbesondere eine Antenne der Leseeinrichtung, in oder auf das transparente Auflageelement zu integrieren. Hierdurch wird eine elektromagnetische Kopplung zwischen dem Lesegerät und der Transpondereinrichtung verbessert. Dies wiederum ermöglicht eine Kommunikation mit einer hohen Datenrate sowie einer hohen Kommunikationsqualität.

Vorgeschlagen wird eine Vorrichtung zur Dokumentenerfassung, insbesondere eine Vorrichtung zur elektrischen und/oder optischen Dokumentenerfassung.

Das zu erfassende Dokument kann insbesondere ein sogenanntes Sicherheits- und/oder Wertdokument sein. Als Sicherheitsdokument wird jedes Dokument bezeichnet, das eine physikalische Entität ist, die gegen ein unautorisiertes Herstellen und/oder Verfälschen durch Sicherheitsmerkmale geschützt sind. Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar oder umfasst ein solches. Beispiele für Sicherheitsdokumente, welche auch Wertdokumente umfassen, die einen Wert repräsentieren, umfassen beispielsweise Reisepässe, Personalausweise, Führerscheine, Identitätskarten, Zutrittskontrollausweise, Krankenkassenkarten, Banknoten, Postwertzeichen, Bankkarten, Kreditkarten, Smartcards, Tickets und Etiketten.

Die Vorrichtung zur Dokumentenerfassung kann auch als Dokumentenprüfgerät bezeichnet werden. Ein solches Dokumentenprüfgerät kann z.B. bei einer Passkontrolle an Grenzübergänge eingesetzt werden. Auch kann ein solches Dokumentenprüfgerät zur Ausweiskontrolle im Rahmen einer Zugangskontrolle z.B. zu Gebäuden oder Stadien eingesetzt werden.

Die Vorrichtung umfasst mindestens ein Auflageelement. Das Auflageelement weist eine Auflagefläche zur Auflage des zu erfassenden Dokuments auf. Das Auflageelement kann auch als Auflagekörper oder Auflageabschnitt bezeichnet werden. Das Auflageelement ist aus einem transparenten Material ausgebildet. Insbesondere kann das Auflageelement aus Glas ausgebildet sein. Somit kann das Auflageelement beispielsweise als Glasplatte oder Glasscheibe ausgebildet sein.

Es ist jedoch selbstverständlich vorstellbar, das Auflageelement aus von Glas verschiedenem, jedoch ebenfalls transparentem Material ausgebildet ist. Das transparente Material kann durchlässig für Licht einer vorbestimmten Wellenlänge oder eines vorbestimmten Wellenlängenbereichs sein. Insbesondere kann das transparente Material durchlässig für Licht aus dem für das menschliche Auge sichtbaren und/oder unsichtbaren Bereich sein. Bevorzugt ist das Material im kurzwelligen Bereich durchlässig bis wenigstens 380 nm, weiter bevorzugt bis wenigstens 300 nm, besonders bevorzugt bis wenigstens 254 nm. Bevorzugt ist das Material im langwelligen Bereich durchlässig bis wenigstens 800 nm, weiter bevorzugt bis wenigstens 1100 nm, besonders bevorzugt bis wenigstens 1700 nm. Durchlässig kann hierbei bedeuten, dass eine Intensität des durch das Auflageelement gestrahlten Lichts bei der Durchstrahlung nur um ein vorbestimmtes geringes Maß um maximal 50 %, bevorzugt maximal 25 %, besonders bevorzugt um maximal 15 %, abgeschwächt wird. Bei dem Material kann es sich beispielsweise um Glas, Quarzglas (reines SiO₂), Korund (Al₂O₃), Polycarbonat (PC), Polymethylmethacrylat (PMMA) oder Polyethylenterephthalat (PET) handeln.

Weiter umfasst die Vorrichtung mindestens eine Empfangseinrichtung zum Empfang von RFID-Signalen einer dokumentenseitig angeordneten Transpondereinrichtung. Wie nachfolgend näher erläutert, kann die Empfangseinrichtung z.B. mindestens eine Antenne oder eine Antennenstruktur umfassen. Die Empfangseinrichtung kann hierbei Teil eines RFID-Lesegeräts sein, welches in die Vorrichtung integriert ist.

Das Lesegerät kann z.B. ein hochfrequentes elektromagnetisches Wechselfeld erzeugen, welches die dokumentenseitige Transpondereinrichtung durchsetzt. Hierzu kann das Lesegerät eine Sendeeinrichtung umfassen. Z.B. kann die Empfangseinrichtung gleichzeitig als Sendeeinrichtung ausgebildet sein, wobei durch die Sendeeinrichtung das hochfrequente elektromagnetische Wechselfeld erzeugt werden kann.

Die Transpondereinrichtung kann dem elektromagnetischen Wechselfeld Energie entziehen, die zur Aussendung von Signalen benötigt wird. In diesem Fall kann die Transpondereinrichtung auch als passive Transpondereinrichtung bezeichnet werden. Bei einer aktiven Transpondereinrichtung kann die zur Aussendung von RFID-Signalen benötigte Energie auch einer im Dokument angeordneten Speichereinrichtung, z.B. einer Batterie, entnommen werden.

Weiter kann die Transpondereinrichtung das von dem Lesegerät erzeugte elektromagnetische Feld beeinflussen oder modulieren. Durch die Beeinflussung kann die Transpondereinrichtung zu übertragende Daten in das elektromagnetische Feld codieren.

Die Empfangseinrichtung des Lesegeräts empfängt wiederum das beeinflusste bzw. modulierte elektromagnetische Feld und erzeugt von dem elektromagnetischen Feld abhängige Ausgangssignale. Eine Auswerteeinrichtung des Lesegeräts kann dann die derart übertragenen Daten in Abhängigkeit des empfangenen Feldes bzw. der Ausgangssignale dekodieren.

Somit ist die Empfangseinrichtung eine Einrichtung zum Empfang des in der dokumentenseitig angeordneten Transpondereinrichtung modulierten elektromagnetischen Feldes oder des von der Transpondereinrichtung ausgesendeten elektromagnetischen Feldes.

Die RFID-Kommunikation kann hierbei mit einer vorbestimmten Taktfrequenz, Übertragungsrate und Übertragungsfrequenz erfolgen. Beispielsweise kann die Kommunikation in Frequenzbereichen von 125 kHz bis 134 kHz, bei einer Übertragungsfrequenz von 13,56 MHz, bei einer Übertragungsfrequenz im Bereich von 865 MHz bis 869 MHz bzw. bis 950 MHz oder bei Übertragungsfrequenzen von 2,45 GHz oder 5,8 GHz erfolgen. Besonders bevorzugt ist eine Übertragung bei 13,56 MHz gemäß ISO/IEC 14443 bzw. ICAO 9303.

Weiter ist zumindest ein Teil der Empfangseinrichtung in oder auf dem transparenten Auflageelement angeordnet. In dem Auflageelement kann bedeuten, dass zumindest ein Teil der Empfangseinrichtung in einem Innenvolumen, also innerhalb, des Auflageelements integriert ist. Auf dem Auflageelement kann bedeuten, dass der Teil der Empfangseinrichtung auf einer äußeren Oberfläche des Auflageelements angeordnet ist.

Selbstverständlich können auch Teile mehrerer Empfangseinrichtungen in oder auf dem Auflageelement angeordnet sein.

Insbesondere kann der Teil der Empfangseinrichtung im oder auf dem Auflageelement angeordnet sein, der mit der Transpondereinrichtung elektromagnetisch gekoppelt ist, um die vorhergehend erläuterte Kommunikation zu ermöglichen.

Dies ermöglicht in vorteilhafter Weise eine verbesserte elektromagnetische Kopplung zwischen dem Lesegerät und der Transpondereinrichtung. Die elektromagnetische Kopplung kann beispielsweise in Abhängigkeit einer Gegeninduktivität zwischen der lesegeräteseitigen Empfangseinrichtung, beispielsweise einer Antenne, und der Transpondereinrichtung beschrieben werden. Je höher die Gegeninduktivität, desto höhere die elektromagnetische Kopplung. Je größer der Anteil des elektromagnetischen Feldes, der sowohl die Empfangseinrichtung als auch die Transpondereinrichtung durchsetzt, desto höher ist auch die Gegeninduktivität. Somit ergibt sich theoretisch die höchste elektromagnetische Kopplung, falls das gesamte von der Transpondereinrichtung modulierte oder erzeugte elektromagnetische Feld die Empfangseinrichtung durchsetzt. Die elektromagnetische Kopplung kann insbesondere dann verbessert werden, wenn die vorhergehend beschriebene Empfangseinrichtung und die Transpondereinrichtung in Hauptstrahlrichtung des elektromagnetischen Feldes fluchtend angeordnet sind und die Transpondereinrichtung in einer gemeinsamen Projektionsebene, die orthogonal zur Hauptstrahlrichtung orientiert ist, auf und/oder innerhalb einer Umrandung der Empfangseinrichtung angeordnet ist.

Die Anordnung des zumindest einen Teils der mindestens einen Empfangseinrichtung auf oder in dem Auflageelement kann hierbei insbesondere in Abhängigkeit einer Lage der Transpondereinrichtung in dem zu erfassenden Dokument erfolgen. Beispielsweise kann der zumindest eine Teil der mindestens einen Empfangseinrichtung derart in oder auf dem Auflageelement angeordnet sein, dass, wenn das zu erfassende Dokument in einer vorbestimmten Position und Orientierung auf der Auflagefläche angeordnet ist, eine elektromagnetische Kopplung maximal ist.

Die Empfangseinrichtung kann insbesondere als Windungsstruktur, beispielsweise als Spule, ausgebildet sein. Die Empfangseinrichtung kann hierbei auch als Sendeeinrichtung ausgebildet sein. In diesem Fall wird, wie vorhergehend erläutert, das elektromagnetische Feld mittels einer Sendeeinrichtung des Lesegeräts erzeugt, durch die Transpondereinrichtung moduliert und durch die Empfangseinrichtung empfangen werden.

Durch die verbesserte elektromagnetische Kopplung ergibt sich in vorteilhafter Weise, dass eine Kommunikation mit einer hohen Datenrate ermöglicht wird. Dies ermöglicht zeitlich schnellere Schreib- und/oder Lesevorgänge mittels einer RFID-Kommunikation.

Erfindungsgemäß umfasst die Vorrichtung mindestens eine Auswerteeinrichtung, wobei mittels der Auswerteeinrichtung in einem von der Einrichtung zur Bilderfassung erzeugten Abbild abgebildete Strukturen der mindestens einen Empfangseinrichtung identifizierbar sind. Somit kann in dem optischen Abbild der abgebildete Teil der Empfangseinrichtung detektiert und kompensiert werden. Kompensieren bedeutet hierbei, dass die von dem Teil der Empfangseinrichtung erzeugten Abbildungsinformationen, z.B. Bildelemente oder Bildausschnitte, nicht bei der Auswertung des optischen Abbilds bezüglich optischer Merkmale des Dokuments berücksichtigt werden. Auch können die von dem Teil der Empfangseinrichtung erzeugten Bildelemente oder Bildausschnitte durch simulierte Bildelemente oder Bildausschnitte ersetzt werden, durch die die entsprechenden Bildelemente oder Bildausschnitte des zu erfassenden Dokuments simuliert werden.

Da der zumindest eine Teil der mindestens einen Empfangseinrichtung sowie die Bilderfassungseinrichtung in der Regel ortsfest relativ zum Auflageelement angeordnet sind, kann die Identifizierung in Abhängigkeit der vorbekannten Lage und/oder Orientierung des mindestens einen Teils der mindestens einen Empfangseinrichtung im optischen Abbild erfolgen. Beispielsweise kann ein vorbestimmter Bildausschnitt, der den zumindest einen Teil der mindestens einen Empfangseinrichtung in jedem erzeugten Abbild umfasst, identifiziert und bei einer folgenden Auswertung z.B. nicht berücksichtigt werden. Auch können Verfahren zur Detektion des Teils der mindestens einen Empfangseinrichtung ausschließlich in einem solchen vorbekannten Bildausschnitt durchgeführt werden.

In diesem Fall ist es möglich, dass der mindestens eine Teil der mindestens einen Empfangseinrichtung nicht aus transparentem Material ausgebildet ist, da eine bildbasierte Kompensation der entsprechenden Verdeckung erfolgt.

In einer weiteren Ausführungsform ist der zumindest eine Teil der mindestens einen Empfangseinrichtung auf der Auflagefläche angeordnet. Insbesondere kann der zumindest eine Teil auf die Auflagefläche aufgeklebt oder auf die Auflagefläche aufgedruckt sein.

Alternativ kann der zumindest eine Teil der mindestens einen Empfangseinrichtung in der Auflagefläche angeordnet sein. Somit ist die Empfangseinrichtung innerhalb eines Teils oder Abschnitts des Auflageelements angeordnet, der die Auflagefläche ausbildet. Hierbei kann zumindest ein Abschnitt des zumindest einen Teils der Empfangseinrichtung bündig zur Auflagefläche angeordnet sein oder teilweise aus dieser herausragen.

Weiter alternativ kann der zumindest eine Teil der mindestens einen Empfangseinrichtung unter der Auflagefläche angeordnet sein. Somit ist die Empfangseinrichtung ebenfalls innerhalb des Auflageelements angeordnet, jedoch unterhalb des Teils oder des Abschnitts des Auflageelements angeordnet, der die Auflagefläche ausbildet. Dies kann bedeuten, dass kein Abschnitt des zumindest einen Teils der Empfangseinrichtung bündig zur Auflagefläche angeordnet ist oder aus dieser herausragt.

Unterhalb kann sich auf eine vertikale Richtung beziehen, die orthogonal zur Auflagefläche verläuft und weg vom Auflageelement orientiert ist.

Dies ermöglicht eine einfache Herstellung bzw. Integration der Empfangseinrichtung in das Auflageelement. Insbesondere können sowohl das Auflageelement als auch die Empfangseinrichtung in sequenziellen Herstellschritten gefertigt und dann miteinander verbunden werden.

In einer weiteren Ausführungsform umfasst der zumindest eine Teil der mindestens einen Empfangseinrichtung eine Antennenstruktur oder bildet diese aus. Selbstverständlich kann zumindest der eine Teile auch mehrere Antennenstrukturen umfassen oder ausbilden, insbesondere Antennenstrukturen mit voneinander verschiedenen geometrischen Ausbildungen. Die Antennenstruktur bezeichnet hierbei eine Struktur oder ein Element zum Empfang elektromagnetischer Wellen, wobei z.B. ein Spannungssignal durch die Antennenstruktur erzeugt werden kann. Die Antennenstruktur kann hierbei elektrische Leiter umfassen. Beispielsweise kann die Antennenstruktur eine Windungsstruktur, beispielsweise eine Spule mit einer vorbestimmten Anzahl von Windungen, umfassen oder ausbilden. Die Antennenstruktur kann hierbei insbesondere vollständig auf oder in dem Auflageelement angeordnet sein.

Umfassen der zumindest eine Teil der mindestens einen Empfangseinrichtung sowie die Transpondereinrichtung jeweils eine Windungsstruktur, insbesondere eine Spule, so können in einer Anordnung von Empfangseinrichtung und Transpondereinrichtung im aufgelegten Zustand des zu erfassenden Dokuments mit einer gewünschten Lage und/oder Orientierung die zentralen Symmetrieachsen der Windungsstrukturen fluchten oder maximal um ein vorbestimmtes Maß voneinander abweichen.

Durch die Integration einer Antennenstruktur in oder auf die Auflagefläche ergibt sich in vorteilhafter Weise, dass zwar eine elektromagnetische Kopplung zwischen Transpondereinrichtung und Empfangseinrichtung maximiert werden kann, jedoch nur die Antennenstruktur, die relativ geringe geometrische Abmaße aufweisen kann, in oder auf dem Auflageelement angeordnet werden muss. Hierdurch ergibt sich in vorteilhafter Weise eine nur geringe Beeinflussung der Bilderfassung, wenn das Dokument durch das Auflageelement hindurch z.B. optisch erfasst wird.

In einer bevorzugten Ausführungsform ist der zumindest eine Teil der mindestens einen Empfangseinrichtung, insbesondere die vorhergehend beschriebene Antennenstruktur, auf einer Oberfläche, insbesondere die Auflagefläche, des Auflageelements aufgedruckt. Beispielsweise kann der zumindest eine Teil mittels eines Siebdruck-Verfahrens auf die Oberfläche aufgedruckt werden.

Dies ermöglicht in vorteilhafter Weise eine einfache Herstellung der erfindungsgemäßen Vorrichtung. Insbesondere können bekannte Verfahren des Antennendrucks verwendet werden.

In einer alternativen Ausführungsform ist der zumindest eine Teil der mindestens einen Empfangseinrichtung, insbesondere die vorhergehend beschriebene Antennenstruktur, auf einer Oberfläche, insbesondere der Auflagefläche, des Auflageelements durch Ätzen einer vollflächigen leitfähigen Beschichtung hergestellt.

Mögliche Materialien für den Druck bzw. die Strukturierung mittels Ätzen sind ITO (Indium-Zinnoxid), FTO (Fluor-Zinnoxid), ATO (Antimon-Zinnoxid) sowie PEDOT (Poly-3,4-ethylendioxythiophen), insbesondere PEDOT:PSS (Poly-3,4-ethylendioxythiophen:Polystyrolsulfonat).

In einer alternativen Ausführungsform umfasst der zumindest eine Teil der mindestens einen Empfangseinrichtung einen oder mehrere Leiter aus elektrisch leitfähigem Material, wobei die Leiter in oder auf dem Auflageelement angeordnet sind. Beispielsweise können die Leiter als Drähte ausgebildet sein. Diese können in das Auflageelement eingebettet werden. Beispielsweise ist es möglich, den/die Leiter in das Auflageelement zu vergießen. Somit ist/sind der/die elektrische(n) Leiter in einem Innenvolumen des Auflageelements angeordnet.

Bevorzugte Materialien für die Leiter sind Gold, Silber und Kupfer. Selbstverständlich kann jedoch jede Art metallischer Leiter verwendet werden, insbesondere Material mit einer hohen Leitfähigkeit. Je höher die Leitfähigkeit des Metalls, desto dünner und somit optisch weniger störend kann der Leiter, beispielsweise der Draht, ausgebildet werden. Auch von Metall verschiedenes leitfähiges Material kann verwendet werden.

Hierdurch kann der zumindest eine Teil der mindestens einen Empfangseinrichtung in vorteilhafter Weise besser vor äußeren mechanischen, thermischen und weiteren Umgebungseinflüssen geschützt werden.

Selbstverständlich können auch Teile mehrerer Empfangseinrichtungen in oder auf dem Auflageelement angeordnet sein. Somit sind auch Ausführungsformen vorstellbar, bei denen (jeweils) ein Teil einer oder mehrerer Empfangseinrichtungen auf der Oberfläche angeordnet, insbesondere aufgedruckt, ist/sind, wobei (jeweils) ein weiterer Teil einer oder mehrerer Empfangseinrichtungen in dem Auflageelement angeordnet ist/sind.

In einer bevorzugten Ausführungsform besteht der zumindest eine Teil der mindestens einen Empfangseinrichtung zumindest teilweise aus einem transparenten Material. Das transparente Material kann hierbei ein elektrisch leitfähiges Material sein. Beispielsweise kann das transparente Material ITO (Indium-Zinnoxid), FTO (Fluor-Zinnoxid), ATO (Antimon-Zinnoxid) sowie PEDOT (Poly-3,4-ethylendioxythiophen), insbesondere PEDOT:PSS (Poly-3,4-ethylendioxythiophen:Polystyrolsulfonat), sein.

Insbesondere kann der gesamte auf oder in dem Auflageelement angeordnete Teil der Empfangseinrichtung aus transparentem Material ausgebildet sein.

Transparent bedeutet hierbei, dass das Material durchlässig für Licht einer vorbestimmten Wellenlänge oder aus einem vorbestimmten Wellenlängenbereich ist. Vorzugsweise kann der Wellenlängenbereich den Wellenlängenbereich umfassen, für den das Auflageelement durchlässig ist. Die Transparenz beträgt bevorzugt wenigstens 50 %, weiter bevorzugt wenigstens 75 %, besonders bevorzugt wenigstens 85 %. Dies kann bedeuten, dass eine Intensität des durch das Auflageelement gestrahlten Lichts bei der Durchstrahlung nur um ein vorbestimmtes geringes Maß, z.B. um maximal 50 %, bevorzugt um maximal 25 %,besonders bevorzugt um maximal 15 %, abgeschwächt wird.

Insbesondere kann das transparente Material durchlässig für Licht aus einem sichtbaren Wellenlängenbereich sein.

Hierdurch ergibt sich in vorteilhafter Weise, dass die optische Bilderfassung durch das Auflageelement hindurch nicht oder nur in sehr geringer Weise durch den zumindest einen Teil der Empfangseinrichtung gestört wird. Insbesondere verdeckt der zumindest eine Teil der Empfangseinrichtung nicht Teile des zu erfassenden Dokuments.

In einer weiteren Ausführungsform umfasst die Vorrichtung mindestens eine Einrichtung zur Bilderfassung, wobei die Einrichtung zur Bilderfassung derart angeordnet ist, dass ein Abbild eines auf die Auflagefläche aufgelegten Dokuments durch das Auflageelement hindurch erzeugbar ist. Hierbei ist somit sowohl das Auflageelement (oder ein Teil davon) sowie das zu erfassende Dokumente (oder ein Teil davon) in einem Erfassungsbereich der Bilderfassungseinrichtung angeordnet.

Weiter vorgeschlagen wird ein Verfahren zur Dokumentenerfassung.

In einem ersten Schritt wird ein zu erfassendes Dokument auf eine Auflagefläche eines transparenten Auflageelements einer Vorrichtung nach einer der vorhergehend beschriebenen Ausführungsformen aufgelegt.

In einem weiteren Schritt empfängt zumindest eine Empfangseinrichtung zum Empfang von RFID-Signalen, von der zumindest ein Teil in oder auf dem Auflageelement angeordnet ist, ein von einer dokumentenseitig angeordneten Transpondereinrichtung ausgesendetes bzw. moduliertes RFID-Signal.

Durch das Anordnen des zumindest einen Teils der mindestens einen Empfangseinrichtung auf oder in dem transparenten Auflageelement, insbesondere auf der Auflagefläche des Auflageelements, ergibt sich in vorteilhafter Weise die vorhergehend erläuterte verbesserte elektromagnetische Kopplung zwischen Empfangseinrichtung und Transpondereinrichtung. Dies wiederum bedingt, wie ebenfalls vorhergehend erläutert, eine hohe Datenübertragungsrate bei der Kommunikation sowie eine hohe Kommunikationsqualität, insbesondere ein hohes Signal-zu-Rauschen-Verhältnis.

Weiter wird weiter ein optisches Abbild des zu erfassenden Dokuments durch das Auflageelement hindurch erzeugt. Weiter werden in dem optischen Abbild abgebildete Strukturen des Teils der mindestens einen Empfangseinrichtung identifiziert. Die identifizierten oder detektierten Teile der Empfangseinrichtung können dann kompensiert werden. Kompensieren bedeutet hierbei, dass Bildelemente oder Bildausschnitte des optischen Abbilds, in welche der Teil der mindestens einen Empfangseinrichtung abgebildet ist, bei einer nachfolgenden Auswertung bzw. Verifikation des Dokuments nicht berücksichtigt werden. Alternativ können diese Bildelemente oder Bildausschnitte durch andere Bildelemente oder Bildausschnitte, die die Abbildung des von entsprechenden Teilen des zu erfassenden Dokuments simulieren, ersetzt werden.

Hierdurch wird in vorteilhafter Weise die Beeinflussung der Auswertung bzw. der Verifikation des optisch abgebildeten Dokuments durch die Empfangseinrichtung minimiert.

Die Erfindung wird anhand eines Ausführungsbeispiels näher erläutert. Die einzige Figur zeigt eine schematische Darstellung einer Vorrichtung zur Dokumentenerfassung.

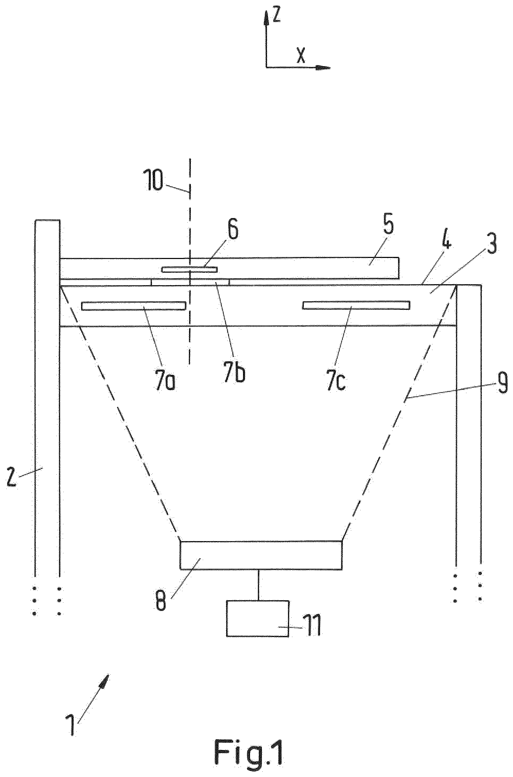

In Fig. 1 ist schematisch eine Vorrichtung 1 zur Dokumentenerfassung dargestellt. Die Vorrichtung 1 umfasst ein Gehäuse 2 sowie eine Glasplatte 3. Die Glasplatte 3 weist eine Auflagefläche 4 für ein zu erfassendes Dokument 5 auf. Das zu erfassende Dokument 5, welches in Fig. 1 auf die Auflagefläche 4 aufgelegt ist, umfasst eine Transpondereinrichtung 6 für eine RFID-basierte Kommunikation mit der Vorrichtung 1. Weiter dargestellt sind mehrere Empfangseinrichtungen 7a, 7b, 7c eines nicht vollständig dargestellten RFID-Lesegeräts, welches von der Vorrichtung 1 umfasst wird. Die Empfangseinrichtungen 7a, 7b, 7c können gleichzeitig als Sendeeinrichtungen ausgebildet sein und z.B. als Antennen, insbesondere Spulen, ausgebildet sein. Hierbei ist dargestellt, dass eine erste und eine dritte Empfangseinrichtung 7a, 7c in der Glasplatte 3 angeordnet sind. Eine zweite Empfangsrichtung 7b ist auf der Auflagefläche 4 angeordnet. Hierbei ist aus Darstellungsgründen dargestellt, dass das Dokument 5 außerhalb einer Bereichs der zweiten Empfangseinrichtung 7b beabstandet von der Auflagefläche 4 ist. Selbstverständlich kann das Dokument 5 in diesem Bereich auf der Auflagefläche 4 als auch auf der zweiten Empfangseinrichtung 7b unmittelbar aufliegen.

Weiter umfasst die Vorrichtung 1 eine Bilderfassungseinrichtung 8. Durch Strichlinien ist schematisch ein Erfassungsbereich 9 der Bilderfassungseinrichtung 8 dargestellt. Sowohl das zu erfassende Dokument 5 als auch die Empfangseinrichtungen 7a, 7b, 7c sind im Erfassungsbereich 9 der Bilderfassungseinrichtung 8 angeordnet.

In Fig. 1 ist dargestellt, dass die zweite Empfangseinrichtung 7b eine zentrale Symmetrieachse 10 aufweist. Beispielsweise kann die zweite Empfangseinrichtung als Spule ausgebildet sein. Die Symmetrieachse 10 der zweiten Empfangseinrichtung 7b fluchtet mit einer zentralen Symmetrieachse der Transpondereinrichtung 6, die z.B. ebenfalls als Spule ausgebildet sein kann. Weiter dargestellt ist eine vertikale Richtung z, die orthogonal zur Auflagefläche 4 der Glasplatte 3 verläuft. Eine Hauptstrahlrichtung des von den Empfangseinrichtungen 7a, 7b, 7c erzeugten elektromagnetischen Feldes kann hierbei parallel zur vertikalen Richtung z orientiert sein.

Weiter dargestellt ist eine erste horizontale Richtung x, die parallel zur Ebene der Auflagefläche 4 verläuft. Hierbei ist dargestellt, dass die zweite Empfangseinrichtung 7b in der ersten horizontalen Richtung x größere Abmaße aufweist als die Transpondereinrichtung 6. Beispielsweise kann ein maximaler Durchmesser der z.B. als Spule ausgebildeten zweiten Empfangseinrichtung 7b größer als ein maximaler Durchmesser der z.B. als Spule ausgebildeten Transpondereinrichtung 6 sein. Durch diese Anordnung wird gewährleistet, dass das von der Transpondereinrichtung 6 modulierte elektromagnetische Feld möglichst vollständig die zweite Empfangseinrichtung 7b durchsetzt, wodurch eine Gegeninduktivität zwischen der zweiten Empfangseinrichtung 7b und der Transpondereinrichtung 6 maximal und eine Streuinduktivität zwischen der zweiten Empfangseinrichtung 7b und der Transpondereinrichtung 6 minimal ist.

Die Empfangseinrichtungen 7a, 7b, 7c können insbesondere aus einem transparenten, leitfähigen Material ausgebildet sein. In diesem Fall werden die Empfangseinrichtungen 7a, 7b, 7c nicht durch die Bilderfassungseinrichtung 8 abgebildet, wenn ein optisches Abbild des zu erfassenden Dokuments 5 erzeugt wird. Weiter dargestellt ist eine Auswerteeinrichtung 11, die von der Bilderfassungseinrichtung 8 erzeugte Abbilder auswerten kann.

Es ist auch möglich, dass die Auswerteeinrichtung 11, z.B. in Abhängigkeit der vorbekannten Lage und Orientierung der Empfangseinrichtungen 7a, 7b, 7c zur Bilderfassungseinrichtung 8 bzw. zum Erfassungsbereich 9, diejenigen Bildelemente identifiziert, in die die Empfangseinrichtungen 7a, 7b, 7c abgebildet sind. Diese können beispielsweise bei einer Auswertung des optischen Abbilds des zu erfassenden Dokuments 5 nicht berücksichtigt werden.

### Bezugszeichenliste

- 1: Vorrichtung
- 2: Gehäuse
- 3: Glasplatte
- 4: Auflagefläche
- 5: Dokument
- 6: Transpondereinrichtung
- 7a: erste Empfangseinrichtung
- 7b: zweite Empfangseinrichtung
- 7c: dritte Empfangseinrichtung
- 8: Bilderfassungseinrichtung
- 9: Erfassungsbereich
- 10: zentrale Symmetrieachse
- 11: Auswerteeinrichtung
- x: erste horizontale Richtung
- z: vertikale Richtung

## Patentansprüche

1. Vorrichtung zur Dokumentenerfassung, wobei die Vorrichtung (1) mindestens ein Auflageelement umfasst, wobei das Auflageelement eine Auflagefläche (4) zur Auflage eines zu erfassenden Dokuments (5) aufweist, wobei das Auflageelement aus transparentem Material ausgebildet ist, wobei die Vorrichtung (1) mindestens eine Empfangseinrichtung (7a, 7b, 7c) zum Empfang von RFID-Signalen einer dokumentenseitig angeordneten Transpondereinrichtung (6) umfasst,
wobei zumindest ein Teil der Empfangseinrichtung (7a, 7b, 7c) in oder auf dem Auflageelement angeordnet ist,
**dadurch gekennzeichnet, dass**
die Vorrichtung (1) mindestens eine Auswerteeinrichtung (11) umfasst, wobei mittels der Auswerteeinrichtung (11) in einem von einer Einrichtung zur Bilderfassung (8) erzeugten Abbild abgebildete Strukturen der mindestens einen Empfangseinrichtung (7a, 7b, 7c) identifizierbar sind.

2. Vorrichtung nach Anspruch 1, **dadurch gekennzeichnet, dass** der zumindest eine Teil der mindestens einen Empfangseinrichtung (7a, 7b, 7c) auf, in oder unter der Auflagefläche (5) angeordnet ist.

3. Vorrichtung nach einem der Ansprüche 1 oder 2, **dadurch gekennzeichnet, dass** der zumindest eine Teil der mindestens einen Empfangseinrichtung (7a, 7b, 7c) eine Antennenstruktur umfasst oder ausbildet.

4. Vorrichtung nach einem der Ansprüche 1 bis 3, **dadurch gekennzeichnet, dass** der zumindest eine Teil der mindestens einen Empfangseinrichtung (7a, 7b, 7c) auf eine Oberfläche des Auflageelements aufgedruckt ist.

5. Vorrichtung nach einem der Ansprüche 1 bis 3, **dadurch gekennzeichnet, dass** der zumindest eine Teil der mindestens einen Empfangseinrichtung (7a, 7b, 7c) auf einer Oberfläche des Auflageelements durch Ätzen einer vollflächigen leitfähigen Beschichtung hergestellt ist.

6. Vorrichtung nach einem der Ansprüche 1 bis 3, **dadurch gekennzeichnet, dass** der zumindest eine Teil der mindestens einen Empfangseinrichtung (7a, 7b, 7c) einen oder mehrere Leiter aus elektrisch leitfähigem Material umfasst, wobei der/die Leiter in oder auf dem Auflageelement angeordnet sind.

7. Vorrichtung nach einem der Ansprüche 1 bis 6, **dadurch gekennzeichnet, dass** der zumindest eine Teil der mindestens einen Empfangseinrichtung (7a, 7b, 7c) zumindest teilweise aus einem transparenten Material besteht.

8. Vorrichtung nach einem der Ansprüche 1 bis 7, **dadurch gekennzeichnet, dass** die Vorrichtung (1) mindestens eine Einrichtung zur Bilderfassung (8) umfasst, wobei die Einrichtung zur Bilderfassung (8) derart angeordnet ist, dass ein Abbild eines auf die Auflagefläche (4) aufgelegten Dokuments (5) durch das Auflageelement hindurch erzeugbar ist.

9. Verfahren zur Dokumentenerfassung, wobei
- ein zu erfassendes Dokument (5) auf eine Auflagefläche (4) eines transparenten Auflageelements einer Vorrichtung (1) zur Dokumenterfassung nach einem der Ansprüche 1 bis 8 aufgelegt wird,
wobei
zumindest eine Empfangseinrichtung (7a, 7b, 7c) zum Empfang von RFID-Signalen, von der zumindest ein Teil in oder auf dem Auflageelement angeordnet ist, ein von einer dokumentenseitig angeordneten Transpondereinrichtung (6) ausgesendetes RFID-Signal empfängt, wobei ein optisches Abbild des zu erfassenden Dokuments (5) durch das Auflageelement hindurch erzeugt wird, wobei weiter in das optische Abbild abgebildete Strukturen des Teils der mindestens einen Empfangseinrichtung (7a, 7b, 7c) identifiziert werden.

## Claims

1. Apparatus for document acquisition, wherein the apparatus (1) comprises at least one support element, wherein the support element comprises a support surface (4) for supporting a document (5) to be acquired, wherein the support element is formed from transparent material, wherein the apparatus (1) comprises at least one receiving unit (7a, 7b, 7c) for receiving RFID signals of a transponder unit (6) arranged on the document side, wherein at least a part of the receiving unit (7a, 7b, 7c) is arranged in or on the support element,
**characterised in that**
the apparatus (1) comprises at least one evaluation device (11), wherein, by means of the evaluation device (11), structures from the at least one receiving unit (7a, 7b, 7c) can be identified which are imaged in an image produced by a device for image detection (8).

2. Apparatus according to claim 1, **characterised in that** the at least one part of the at least one receiving unit (7a, 7b, 7c) is arranged on, in or under the support surface (5).

3. Apparatus according to any one of claims 1 or 2, **characterised in that** the at least one part of the at least one receiving unit (7a, 7b, 7c) comprises or forms an antenna structure.

4. Apparatus according to any one of claims 1 to 3, **characterised in that** the at least one part of the at least one receiving unit (7a, 7b, 7c) is printed onto a surface of the support element.

5. Apparatus according to any one of claims 1 to 3, **characterised in that** the at least one part of the at least one receiving unit (7a, 7b, 7c) is produced on a surface of the support element by etching of a full-surface conductive coating.

6. Apparatus according to any one of claims 1 to 3, **characterised in that** the at least one part of the at least one receiving unit (7a, 7b, 7c) comprises one or more conductors made of electrically conductive material, wherein the conductor(s) are arranged in or on the support element.

7. Apparatus according to any one of claims 1 to 6, **characterised in that** the at least one part of the at least one receiving unit (7a, 7b, 7c) consists at least partially of a transparent material.

8. Apparatus according to any one of claims 1 to 7, **characterised in that** the apparatus (1) comprises at least one device for image acquisition (8), wherein the device for image acquisition (8) is arranged in such a way that an image of a document (5) laid on the support surface (4) can be produced through the support element.

9. Method for document acquisition, wherein
- a document (5) which is to be acquired is laid on a support surface (4) of a transparent support element of an apparatus (1) for document acquisition in accordance with any one of claims 1 to 8,
wherein
at least one receiving unit (7a, 7b, 7c) for the receiving of RFID signals, of which at least a part is arranged in or on the support element, receives an RFID signal sent from a transponder device (6) arranged on the document side, wherein an optical image of the document (5) which is to be acquired is produced through the support element, wherein further structures, imaged into the optical image, of the part of the at least one receiving unit (7a, 7b, 7c) are identified.

## Revendications

1. Dispositif de capture de documents, dans lequel le dispositif (1) comprend au moins un élément de support, dans lequel l'élément de support présente une surface de support (4) servant à supporter un document (5) à capturer, dans lequel l'élément de support est réalisé à partir d'un matériau transparent, dans lequel le dispositif (1) comprend au moins un système de réception (7a, 7b, 7c) servant à recevoir des signaux RFID d'un système de transpondeur (6) disposé côté document, dans lequel au moins une partie du système de réception (7a, 7b, 7c) est disposée dans ou sur l'élément de support,
**caractérisé en ce que**
le dispositif (1) comprend au moins un système d'évaluation (11), dans lequel des structures de l'au moins un système de réception (7a, 7b, 7c), reproduites dans une image générée par un système de capture d'images (8), peuvent être identifiées au moyen du système d'évaluation (11).

2. Dispositif selon la revendication 1, **caractérisé en ce que** l'au moins une partie de l'au moins un système de réception (7a, 7b, 7c) est disposée sur, dans ou sous la surface de support (5).

3. Dispositif selon l'une quelconque des revendications 1 ou 2, **caractérisé en ce que** l'au moins une partie de l'au moins un système de réception (7a, 7b, 7c) comprend ou réalise une structure d'antennes.

4. Dispositif selon l'une quelconque des revendications 1 à 3, **caractérisé en ce que** l'au moins une partie de l'au moins un système de réception (7a, 7b, 7c) est imprimée sur une surface de l'élément de support.

5. Dispositif selon l'une quelconque des revendications 1 à 3, **caractérisé en ce que** l'au moins une partie de l'au moins un système de réception (7a, 7b, 7c) est fabriquée sur une surface de l'élément de support par décapage d'un revêtement conducteur appliqué sur toute la surface.

6. Dispositif selon l'une quelconque des revendications 1 à 3, **caractérisé en ce que** l'au moins une partie de l'au moins un système de réception (7a, 7b, 7c) comprend un ou plusieurs conducteurs composés d'un matériau électriquement conducteur, dans lequel le/les conducteur(s) sont disposés dans ou sur l'élément de support.

7. Dispositif selon l'une quelconque des revendications 1 à 6, **caractérisé en ce que** l'au moins une partie de l'au moins un système de réception (7a, 7b, 7c) est constituée au moins en partie d'un matériau transparent.

8. Dispositif selon l'une quelconque des revendications 1 à 7, **caractérisé en ce que** le dispositif (1) comprend au moins un système de capture d'images (8), dans lequel le système de capture d'images (8) est disposé de telle manière qu'une image reproduite d'un document (5) posé sur la surface de support (4) peut être générée à travers l'élément de support.

9. Procédé de capture de documents, dans lequel
- un document (5) à capturer est posé sur une surface de support (4) d'un élément de support transparent d'un dispositif (1) de capture de documents selon l'une quelconque des revendications 1 à 8,
dans lequel
au moins un système de réception (7a, 7b, 7c) servant à recevoir des signaux RFID, dont au moins une partie est disposée dans ou sur l'élément de support, reçoit un signal RFID émis par un système de transpondeur (6) disposé côté document, dans lequel une image reproduite optique du document à capturer (5) est générée à travers l'élément de support, dans lequel en outre des structures de la partie de l'au moins un système de réception (7a, 7b, 7c), reproduites dans l'image reproduite optique, sont identifiées.
